**Europäisches Patentamt**

**European Patent Office**

**Office européen des brevets**

(19)

(11) Veröffentlichungsnummer: **0 058 634**

**A1**

(12)

# EUROPÄISCHE PATENTANMELDUNG

(21) Anmeldenummer: **82810042.0**

(22) Anmeldetag: **01.02.82**

(51) Int. Cl.³: **C 12 G 3/08**

(30) Priorität: **06.02.81 CH 889/81**

(43) Veröffentlichungstag der Anmeldung:
**25.08.82 Patentblatt 82/34**

(84) Benannte Vertragsstaaten:
**IT**

(71) Anmelder: **Schweizerische Eidgenossenschaft handelnd durch die Eidg. Forschungsanstalt für Obst-, Wein- und Gartenbau Wädenswil**

**CH-8820 Wädenswil (CH)**

(72) Erfinder: **Schobinger, Ulrich**
**Bellevueweg 17**
**CH-6300 Zug (CH)**

(72) Erfinder: **Waldvogel, Robert**
**Nordstrasse 6**
**CH-8820 Wädenswil (CH)**

(72) Erfinder: **Dürr, Peter**
**Speerstrasse 12**
**CH-8820 Wädenswil (CH)**

(54) **Verfahren zur Herstellung von alkoholfreiem Wein oder Fruchtwein.**

(57) Das Verfahren zur Herstellung von alkoholfreiem Wein oder Fruchtwein mit einem Restalkoholgehalt von weniger als 5 g/kg umfasst vorerst einen Verdampfungsprozess zur Abtrennung von Alkohol und Aromastoffen aus Wein oder Fruchtwein. Das dabei erhaltene alkohol- und aromahaltige Brüdenkondensat wird durch Gegenstromdestillation in einer Destillierkolonne mit einer genügend hohen Zahl an theoretischen Trennstufen fraktioniert und die im Siedebereich von 77 - 97°C abgetrennten Aromastoffe werden mit dem entalkoholisierten Wein- bzw. Fruchtweinkonzentrat, entaromatisiertem Traubensaft bzw. entaromatisiertem Fruchtsaft und mineralstofffreiem Wasser zum trinkfertigen alkoholfreien Getränk aufgemischt und gegen mikrobiellen und oxidativen Verderb stabilisiert.

EP 0 058 634 A1

## Verfahren zur Herstellung von alkoholfreiem Wein oder Fruchtwein

Die Erfindung betrifft ein Verfahren zur Herstellung von alkoholfreiem Wein oder Fruchtwein, wobei der ursprünglich vorhandene Alkoholgehalt soweit reduziert wird, dass letzterer in den erfindungsgemäss hergestellten Produkten die lebensmittelrechtlich gesetzten Grenzwerte für alkoholfreie Fruchtsäfte oder alkoholfreies Bier nicht überschreitet. Insbesondere gestattet das erfindungsgemässe Verfahren alkoholfreie Weine oder Fruchtweine herzustellen, deren Aethylalkoholgehalt unter dem in den internationalen Normen des Codex Alimentarius der FAO/WHO für Fruchtsäfte festgelegten Grenzwert von 5 g/kg liegt.

Ein alkoholfreier Wein oder Fruchtwein soll, entsprechend der Bezeichnung, alle ursprünglichen Komponenten des alkoholhaltigen Ausgangsmaterials enthalten, ausser Alkohol. Artfremde Zusätze sind aus grundsätzlichen und vor allem auch aus lebensmittelrechtlichen Ueberlegungen auszuschliessen. Neben der löslichen Trockensubstanz bzw. den Extraktstoffen sollen vor allem auch die flüchtigen Aromastoffe noch möglichst weitgehend vorhanden sein. Diese umfassen sowohl die bereits in der Traube vorhandenen sortentypischen Aromastoffe, z.B. Muskat-Aroma, als auch die bei der alkoholischen Gärung entstehenden Nebenprodukte. Dazu zählen insbesondere die höheren Alkohole, ferner Ester, Aldehyde, Ketone, Säuren, Lactone etc. Die gesamte Menge der Aromastoffe in Wein oder Fruchtwein ist sehr gering und beträgt ca. 0.5 - 1 g/l. Trotzdem sind sie für den Charakter eines Weines oder Fruchtweines von entscheidender Bedeutung.

Bis heute ist es nicht gelungen, sog. alkoholfreie Weine oder Fruchtweine von befriedigender geruchlicher und geschmacklicher Qualität herzustellen. Die bisher verwendeten thermischen Verfahren für den Entzug von Alkohol durch direkte Destillation von Wein oder Fruchtwein ergeben Produkte von ungenügender sensorischer Qualität, weil durch die genannten Prozesse mit dem Alkohol auch die Aromastoffe weitgehend entfernt werden. Weder ein nachträglicher Zusatz einer geringen Menge Wein oder Fruchtwein, unter Berücksichtigung der gesetzlichen Grenzwerte, noch ein Zusatz von Gärungskohlensäure zum entalkoholisierten Produkt ergeben bezüglich Aromastoffmenge ein befriedigendes Resultat. Vielfach weisen die nach den genannten Verfahren hergestellten Produkte infolge längerer Aufenthaltszeit bei höheren Temperaturen zusätzlich noch Hitzeschäden (sog. Kochton) auf. Auch das schonende Verfahren der Umkehrosmose ist für die Herstellung von alkoholfreien Weinen oder Fruchtweinen mit einem Alkoholgehalt unter 5 g/kg nicht verwendbar, da gleichzeitig mit dem Alkohol auch die Aromastoffe durch die Membran diffundieren und somit weitgehend verloren gehen. Andere Verfahren, wie die vorzeitige Abstoppung der Gärung, führen zu unausgereiften mostigen Weinen bzw. Fruchtweinen, welche in geschmacklicher Hinsicht keineswegs zu befriedigen vermögen.

Gegenstand der vorliegenden Erfindung betrifft ein Verfahren zur Herstellung von alkoholfreiem Wein oder Fruchtwein, wobei in einem ersten Schritt der Alkohol zusammen mit den Aromastoffen aus dem Wein bzw. Fruchtwein abgedampft, das alkohol- und aromahaltige Brüdenkondensat in einem zweiten Schritt rektifiziert, die dabei abgetrennten Aromastoffe in einem dritten Schritt dem entalkoholisierten Konzentrat wieder beigefügt und zusammen mit einem entaromatisierten Traubensaft bzw. Fruchtsaft und entmineralisiertem oder destilliertem Wasser zum fertigen alkoholfreien Getränk aufgemischt wird.

Die vorgängige Entaromatisierung der für die geschmackliche Harmonisierung verwendeten Fruchtsäfte (Traubensaft, Apfelsaft etc.) ist für das erfindungsgemässe Verfahren zur Herstellung von alkoholfreiem Wein oder Fruchtwein mit einem Alkoholgehalt < 5 g/kg unbedingt erforderlich, um einerseits den in Fruchtsäften stets in kleineren Mengen vorhandenen Alkohol zu entfernen, andererseits

um unerwünschte dumpfe Geruchskomponenten und sogenannte fruchtigsüsse Aromakomponenten zu eliminieren. Die dazu erforderliche Abdampfrate liegt zwischen 15 - 30 %.

Die für die erfindungsgemässe Abdampfung des Alkohols und der Aromastoffe geeigneten Anlagen umfassen insbesondere solche Verdampfer, welche eine möglichst rasche und schonende Eindampfung von Wein oder Fruchtwein gestatten, wie z.B. Röhrenverdampfer, Plattenverdampfer, Dünnschichtverdampfer, Expanding-Flow-Verdampfer, Zentrifugalverdampfer, Zweistoff- oder Tieftemperaturverdampfer. Die Verdampfungstemperaturen können variieren zwischen 15° bis gegen 100°C. Die Aufenthaltszeit des Produkts bei den tieferen Temperaturen beträgt z.B. 15 - 20 Minuten, bei höheren Temperaturen 1 - 4 Minuten, bei Dünnschicht- und Zentrifugalverdampfern weit weniger als 1 Minute. Die Verdampfung kann entweder durchgehend bei Unterdruck oder bei Normaldruck und Unterdruck durchgeführt werden.

Die bei der erfindungsgemässen Verdampfung von Wein oder Fruchtwein anfallenden alkohol- und aromahaltigen Brüdendämpfe müssen in geeigneten Kühlern möglichst verlustlos kondensiert und auf Temperaturen unter 20°C abgekühlt werden. Die zur praktisch völligen Entalkoholisierung notwendige Abdampfrate beträgt je nach Verdampfertyp und Verdampfungsart 30 - 60 %.

Die Verdampfung des Weines bzw. Fruchtweines muss soweit erfolgen, dass der verbleibende Restalkoholgehalt im Wein- bzw. Fruchtweinkonzentrat nach Rückverdünnung auf Ursprungsstärke unter 2 g/l absinkt. Die Verdampfung erfolgt bevorzugt mehrstufig im Vakuum. Durch eine 15 - 20 %-ige Verdampfung von Wein bzw. Fruchtwein bei Normaldruck in einem 1-Stufenverdampfer kann bereits der grösste Teil der Aromastoffe gewonnen werden. Der restliche Alkohol kann durch eine zusätzliche Abdampfung von 15 - 25 % im Vakuum unter die oben zitierte Grenze von 2 g/l reduziert werden.

- 4 -

Die nach dem erfindungsgemässen Verfahren erhaltenen Brüdenkondensate weisen neben Alkohol den grössten Teil der charakteristi-.
schen Aromastoffe auf. Es zeigte sich nun, dass diese extraktfreien Brüdenkondensate, im Gegensatz zu Wein oder Fruchtwein,
bei der anschliessenden Rektifikation weitgehend stabil sind, d.h.
auch bei längerdauernder Rektifikation in der Destillierkolonne
treten keine nennenswerten Hitzeschäden ein.

Die gewünschte Trennung des Alkohols von den Aromastoffen wird
nach dem erfindungsgemässen Verfahren durch Gegenstromdestillation
der vereinigten Brüdenkondensate in einer Rektifizierkolonne von
genügender Wirksamkeit erreicht. Als Rektifizierapparate eignen
sich die in der Destillationstechnik bekannten Boden- und Füllkörperkolonnen sowie Sonderkonstruktionen, z.B. Sulzerkolonnen.
Die Art der Kolonne ist für das erfindungsgemässe Verfahren nicht
von entscheidender Bedeutung, hingegen sollte die Zahl der erforderlichen theoretischen Trennstufen über 40, besser zwischen
60 - 80 liegen, um eine genügend wirkungsvolle Fraktionierung zu
erreichen.

Bei diskontinuierlichem Betrieb der Gegenstromdestillation wird
das im untern Drittel bis auf halber Höhe eingespiesene alkohol-
und aromahaltige Brüdenkondensat nach Siedebereichen in folgende
Fraktionen zerlegt und über den Kolonnenkopf entnommen:

| | |
|---|---|
| Vorlauf (vorwiegend Methanol und Aethylacetat) | bis $76^{o}$C |
| Alkoholfraktion (vorwiegend Aethanol) | $76-78^{o}$C |
| Aromafraktionen (wichtigste Aromastoffe, wenig Aethanol) | $77-97^{o}$C |

Bei kontinuierlichem Betrieb der Gegenstromdestillation wird das
im mittleren Drittel der Fraktionierkolonne eingespiesene alkohol-
und aromahaltige Brüdenkondensat wie folgt fraktioniert: Der Vorlauf und die Alkoholfraktion im Siedebereich bis gegen ca. $77^{o}$C
werden über den Kolonnenkopf, die Aromafraktionen im Siedebereich
von $77-97^{o}$C werden seitlich unterhalb der Einspeisestelle der Kolonne entnommen. Der Blaseninhalt wird durch kontinuierliches Wegpumpen von Flüssigkeit auf konstantem Niveau gehalten.

Die im Siedebereich von 77 - 97°C anfallenden Aromafraktionen umfassen sowohl die sortentypischen Aromastoffe sowie den grössten Teil der Gärungsaromen. Für die endgültige Aufmischung des entalkoholisierten Wein- bzw. Fruchtweinkonzentrats zum fertigen alkoholfreien Getränk werden neben entaromatisiertem Trauben- bzw. Fruchtsaft und mineralstofffreiem Wasser nur die im Siedebereich von 77 - 97°C erhaltenen Aromafraktionen verwendet. Der Vorlauf und die in die Blase gelangten Destillationsrückstände können für die Aufmischung des alkoholfreien Getränks nicht verwendet werden, da sie zu einem grossen Teil unerwünschte Geruchs- und Geschmackskomponenten aufweisen.

Die fertige Mischung wird anschliessend nach allgemein bekannten technologischen Massnahmen zum trinkfertigen alkoholfreien Getränk aufbereitet, indem man die Mischung mit der erforderlichen Menge Kohlensäuregas imprägniert, durch Sterilfiltration und/oder Pasteurisation gegen mikrobiellen, durch Zusatz von Antioxidantien wie $SO_2$ oder Ascorbinsäure gegen oxidativen Verderb stabilisiert.

Anwendungsbeispiel 1: 106.5 Liter Rotwein vom Typ Pinot noir (Blauburgunder) aus der Kelterei der Eidg. Forschungsanstalt Wädenswil, mit einem Alkoholgehalt von 10.3 Vol.%, wurden auf einer dreistufigen kombinierten Eindampf- und Aromagewinnungsanlage Typ UNIPEKTIN Pilot Plant P 103 konzentriert. Der Druck dampfseitig im ersten bzw. zweiten und dritten Verdampfungskörper betrug 1.8 bar bzw. 1.35 bar und 650 mbar, im Abscheider III 100 mbar. Die Produkttemperatur in den drei Verdampfungskörpern lag bei ca. 99° bzw. 60° und 35°C. Der Durchsatz für 106.5 Liter Rotwein betrug insgesamt 46 Minuten, entsprechend 139 1/h. Das Brüdenkondensat aus der ersten und zweiten Verdampfungsstufe wurde vereinigt und erreichte total 37.6 Liter. Das Brüdenkondensat aus der dritten Verdampfungsstufe wurde verworfen, da es nur noch Spuren von Aromastoffen enthielt. Insgesamt fielen 46.4 Liter entalkoholisiertes Weinkonzentrat mit einem Restalkoholgehalt von 0.28 Vol.% (=2.2 g/l) an. Die Abdampfrate betrug demnach 56.4 %.

2 Liter des erhaltenen aromahaltigen Brüdenkondensats mit einem Alkoholgehalt von 26.8 Vol.% wurden in einer Labor-Rektifizierkolonne von 50 mm Innendurchmesser und 1600 mm Höhe durch Gegenstromdestillation bei Normaldruck in 3 Fraktionen aufgetrennt. Die Füllkörperkolonne wurde mit Maschendrahtringen mit Steg 3 x 3 mm, 2500 Maschen/$cm^2$, Werkstoff Nr. 4401, beschickt, wodurch mindestens 60 theoretische Trennstufen erreicht werden.

Die Destillationskolonne wurde zuerst mit Wasser bei totalem Rückfluss geflutet. Das vorgängig im Durchlauf auf 75°C erwärmte Brüdenkondensat wurde auf halber Höhe der Kolonne mit einer Dosierung von 400 ml/h eingespeist. Infolge dieser Einspeisetechnik kann ein Rückfluss der Aromastoffe in die Destillierblase verhindert werden, was zu einer geringeren Wärmebelastung der Aromastoffe führt. Die Abnahme der verschiedenen Fraktionen erfolgte bei einem Rücklaufverhältnis von 1:5 bis 1:10. Der Destillatanfall betrug ca. 30 ml/h. Es wurden folgende Fraktionen erhalten:

Fraktion 1: Vorlauf + Aethanol, < 77°C, 130 ml Destillat à 95.3 Vol.% Alkohol

Fraktion 2: Aethanol, < 78°C, 412 ml Destillat à 96.5 Vol.% Alkohol

Fraktion 3: Aromastoffe, > 78-97°C, 36 ml Destillat à 22.5 Vol.% Alkohol.

Gaschromatographische Untersuchungen der erhaltenen Fraktionen zeigten, dass in der Fraktion 1 neben Aethanol vor allem Methanol und Aethylacetat (Vorlauf) enthalten sind, d.h. zwei Komponenten, auf die aus Qualitätsgründen ohnehin verzichtet werden sollte. Fraktion 2 enthält praktisch nur Aethanol. Fraktion 3 enthält 80-85 % der im Brüdenkondensat vorhandenen Aromastoffe. Der Alkoholgehalt der Fraktion 3 stammt aus azeotropen Gemischen von Aromastoffen mit Alkohol. Insgesamt beträgt der Alkoholanteil der aromahaltigen Fraktion 3 rund 1.5 % des ursprünglichen Gehalts des Brüdenkondensats.

Die in der Fraktion 3 angefallenen 36 ml Aromastoffe wurden nun mit dem entalkoholisierten Weinkonzentrat, mit entaromatisiertem Traubensaft der Sorte Blauburgunder (Pinot noir) und mit destilliertem Wasser zu trinkfertigem alkoholfreiem Wein aufgemischt nach folgender Formel:

| | |
|---|---|
| Entalkoholisiertes Rotweinkonzentrat (Blauburgunder) | 1422 ml |
| Destilliertes Wasser | 1445 ml |
| Entaromatisierter Traubensaft (Blauburgunder) 16.6°Brix | 883 ml |
| Aromastoffe (Fraktion 3) | 36 ml |
| Alkoholfreier Rotwein | 3786 ml |

Nach Zusatz von 50 mg/l $SO_2$ wurde diese Mischung über eine K-10 Filterschicht vorfiltriert, über einen EK-Filter keimfrei gemacht und steril in Flaschen abgefüllt. In der Degustation zeigte dieser alkoholfreie Wein ein typisch weiniges, an Blauburgunder erinnerndes Aroma und einen kräftigen, angenehmen Geschmack.

Die chemische Analyse dieses alkoholfreien Rotweins zeigte folgendes Resultat:

| | |
|---|---|
| pH-Wert | 3.60 |
| Titrierbare Gesamtsäure | 5.0 g/l |
| Relative Dichte 20/20 | 1.02316 |
| Zucker nach Inversion | 42 g/l |
| Aethylalkohol | 2.4 g/l (= 2.34 g/kg) |

Anwendungsbeispiel 2: 100 Liter Apfelwein mit einem Alkoholgehalt von 5.1 Vol.% wurden in zwei Schritten in einem 1-stufigen UNIPEKTIN-Verdampfer konzentriert. In der ersten Passage wurden bei Normaldruck 15 % des Apfelweins verdampft. Es fielen 84.2 l Apfelweinkonzentrat mit 6.4 g/l Alkohol und 15.7 l aromahaltiges Brüdenkondensat à 28.3 Vol.% Alkohol an. In der zweiten Passage wurden bei einem Druck von 100 mbar zusätzliche 20 % der angefallenen 84.2 l Apfelweinkonzentrat abgedampft. Die gesamte Abdampfrate bezogen auf ursprünglichen Apfelwein betrug demnach 32 %. Das erhaltene Apfelweinkonzentrat wies einen restlichen Alkoholgehalt von 0.37 Vol.% (= 2.9 g/l) auf. Das im zweiten Verdampfungsschritt erhaltene Brüdenkondensat enthielt ausser Alkohol nur noch geringe Mengen an Aromastoffen, auf deren Rückgewinnung verzichtet werden kann.

2 Liter des aus der ersten Passage stammenden aromahaltigen Brüdenkondensats mit einem Alkoholgehalt von 28.3 Vol.% wurden in der im Anwendungsbeispiel 1 beschriebenen Labor-Rektifizierkolonne bei Normaldruck durch Gegenstromdestillation in 3 Fraktionen aufgetrennt. Die aromahaltige Fraktion 3 umfasste 46 ml Destillat à 27.8 Vol.% Alkohol.

Die Aufmischung zu trinkfertigem alkoholfreiem Apfelwein erfolgte nach folgender Formel:

| | |
|---|---|
| Entalkoholisiertes Apfelweinkonzentrat | 3840 ml |
| Destilliertes Wasser | 1760 ml |
| Entaromatisierter Apfelsaft à 12.5°Brix | 2800 ml |
| Aromastoffe (Fraktion 3) | 46 ml |
| Alkoholfreier Apfelwein | 8446 ml |

Dieser alkoholfreie Apfelwein wurde nach Zusatz von 150 mg/l Ascorbinsäure über eine K-10 Filterschicht filtriert, in Flaschen abgefüllt, mit Kronenkork verschlossen und pasteurisiert. In der Degustation zeigte dieses alkoholfreie Getränk den typischen Geruch und Geschmack eines herkömmlichen Apfelweines.

Die chemische Analyse des trinkfertigen alkoholfreien Apfelweins ergab folgendes Resultat:

| | |
|---|---|
| pH-Wert | 3.40 |
| Titrierbare Gesamtsäure | 5.3 g/l |
| Relative Dichte 20/20 | 1.02175 |
| Zucker nach Inversion | 36 g/l |
| Aethylalkohol | 2.6 g/l (=2.54 g/kg) |

Anwendungsbeispiel 3: 10 Liter des nach dem im Anwendungsbeispiel 1 beschriebenen Abdampfprozess erhaltenen aromahaltigen Brüdenkondensats aus Blauburgunder-Rotwein mit einem Alkoholgehalt von 26.8 Vol.% wurden in kontinuierlicher Arbeitsweise durch Gegenstromdestillation bei Normaldruck fraktioniert. Die im Anwendungsbeispiel 1 beschriebene Laborkolonne wurde so modifiziert, dass 320 mm unterhalb der Einspeisestelle der Kolonne eine Seitenentnahmestelle eingebaut wurde.

Das im Durchlauf auf 75°C erwärmte Brüdenkondensat wurde auf halber Höhe der Kolonne eingespeist. Der Vorlauf und die Alkoholfraktion im Siedebereich bis gegen ca. 77°C wurden über den Kolonnenkopf entnommen. Die über die seitliche Entnahmestelle anfallende Aromafraktion mit Siedebereich von 77 - 97°C ergab total 205 ml Destillat mit einem Alkoholgehalt von 24.5 Vol.%. Das Flüssigkeitsniveau in der Destillationsblase wurde durch kontinuierliches Wegpumpen konstant gehalten. Für die Aufmischung zum alkoholfreien Rotwein wurden folgende Anteile verwendet:

| | |
|---|---|
| Entalkoholisiertes Rotweinkonzentrat (Blauburgunder) | 7110 ml |
| Mineralstofffreies Wasser | 7225 ml |
| Entaromatisierter Blauburgunder-Traubensaft, 16.6°Brix | 4415 ml |
| Aromastoffe, Siedebereich 77 - 97°C | 205 ml |
| Alkoholfreier Rotwein | 18955 ml |

Diese Mischung wurde mit Kohlensäuregas bis auf einen $CO_2$-Gehalt von 0.8 g/l imprägniert, mit 50 mg/l $SO_2$ versetzt, über K-10 Filterschichten vorfiltriert und über einen EK-Filter keimfrei gemacht und steril in Flaschen abgefüllt. Mit Ausnahme eines höheren Restalkoholgehaltes (total 2.9 g/l) war die chemische Analyse dieses alkoholfreien Rotweins gleich wie im Anwendungsbeispiel 1. In geruchlicher und geschmacklicher Hinsicht erinnerte dieses alkoholfreie Getränk stark an einen herkömmlichen Blauburgunderwein.

Patentansprüche

1. Verfahren zur Herstellung von alkoholfreiem Wein oder Fruchtwein mit einem Restalkoholgehalt von weniger als 5 g/kg, dadurch gekennzeichnet, dass man mindestens 30 % eines vollständig vergorenen Weines bzw. Fruchtweines in einer Konzentrieranlage abdampft, das dabei anfallende alkohol- und aromahaltige Brüdenkondensat durch eine separate Gegenstromdestillation in einer Destillationskolonne mit einer genügend hohen Zahl an theoretischen Trennstufen fraktioniert, anschliessend nur die im Siedebereich von 77 - 97°C anfallenden Aromafraktionen für die Aufmischung mit dem entalkoholisierten Wein-bzw. Fruchtweinkonzentrat, mit entaromatisiertem Trauben- bzw. Fruchtsaft und mit mineralstofffreiem Wasser verwendet und diese Mischung nach allgemein bekannten technologischen Massnahmen zum trinkfertigen alkoholfreien Getränk aufbereitet und gegen mikrobiellen und oxidativen Verderb stabilisiert.

2. Verfahren gemäss Patentanspruch 1, dadurch gekennzeichnet, das man 30 bis 60 % des Weines bzw. Fruchtweines in einem mehrstufigen Verdampfer im Vakuum bei Temperaturen von 15 - 100°C abdampft.

3. Verfahren nach Patentanspruch 1, dadurch gekennzeichnet, dass man vorerst 15 - 20 % des Weines bzw. Fruchtweines bei Normaldruck, anschliessend weitere 15 - 25 % bei Unterdruck verdampft.

4. Verfahren nach Patentanspruch 1, dadurch gekennzeichnet, dass die zur separaten Gegenstromdestillation der alkohol- und aromahaltigen Brüdenkondensate verwendete Fraktionierkolonne mindestens 40 theoretische Trennstufen aufweist.

5. Verfahren nach Patentanspruch 1, dadurch gekennzeichnet, dass man das durch Verdampfen von Wein bzw. Fruchtwein gewonnene alkohol- und aromahaltige Brüdenkondensat bei diskontinuierlichem Betrieb der Gegenstromdestillation im untern Drittel bis auf halber Höhe der Fraktionierkolonne einspeist, den Vorlauf, die Alkohol- und die Aroma-Fraktionen beim Kolonnenkopf entnimmt.

6. Verfahren nach Patentanspruch 1, dadurch gekennzeichnet, dass man das alkohol- und aromahaltige Brüdenkondensat bei kontinuierlichem Betrieb der Gegenstromdestillation im mittleren Drittel der Fraktionierkolonne einspeist, den Vorlauf und die Alkoholfraktion beim Kolonnenkopf, die Aromafraktionen unterhalb der Einspeisestelle der Kolonne entnimmt.

7. Verfahren nach Patentanspruch 5 oder 6, dadurch gekennzeichnet, dass man die Gegenstromdestillation der alkohol- und aromahaltigen Brüdenkondensate bei Normaldruck durchführt.

8. Verfahren nach Patentanspruch 5 oder 6, dadurch gekennzeichnet, dass man die Gegenstromdestillation der alkohol- und aromahaltigen Brüdenkondensate bei Unterdruck durchführt.

9. Verfahren nach Patentanspruch 5 oder 6, dadurch gekennzeichnet, dass die bei der Gegenstromdestillation der alkohol- und aromahaltigen Brüdenkondensate erzielbare Gesamtausbeute an Aromastoffen über 80 % liegt.

10. Verfahren nach Patentanspruch 1, dadurch gekennzeichnet, dass die für die Entaromatisierung des Trauben bzw. Fruchtsaftes notwendige Abdampfrate 15 - 30 % beträgt.

**0058634**

Nummer der Anmeldung

🌀 Europäisches Patentamt

**EUROPÄISCHER RECHERCHENBERICHT**

EP 82 81 0042

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | C 12 G 3/08 |
| X/Y | <u>FR - A - 2 256 244</u> (THUMM H.J.)<br><br>* Patentansprüche 1,7,8,9,10,11, 12,13; Seite 7, Zeile 5 - Seite 8, Zeile 13; Seite 4, Zeilen 20-36; Figur 2 *<br><br>& DE - A - 2 434 313<br><br>-- | 1,2,6-8 | |
| Y | <u>FR - A - 541 873</u> (G. CAPELLE)<br><br>* Zusammenfassung; Seite 2, Zeilen 7-16 *<br><br>-- | 1,7,8 | RECHERCHIERTE SACHGEBIETE (Int Cl.³)<br><br>C 12 G |
| Y | <u>GB - A - 139 099</u> (J. SCHNEIBLE)<br><br>* Figur 1; Patentansprüche 1,3; Seite 1, Zeilen 5-13; Seite 2, Zeilen 12-57; Seite 3, Zeilen 18-48; Seite 4, Zeilen 12-18; Zeilen 9-11 *<br><br>& DE - C - 377 406<br><br>-- | 1,2,6,8 | |
| Y | <u>DE - A - 1 442 238</u> (HENNINGER-BRAU KGaA)<br><br>* Patentansprüche 1,2,3,4,5,6,7, 10; Seite 1, Zeilen 21-27 *<br><br>-- | 1,2,6 | |
| A | <u>FR - A - 696 773</u> (M.G. COUPEAU et al.)<br><br>* Zusammenfassung 1,2,3; Seite 2, Zeile 80 - Seite 3, Zeile 45 *<br><br>--<br><br>./. | 1,2,6 | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie. übereinstimmendes Dokument

ℹ Der vorliegende Recherchenbericht wurde für alle Patentansprüche erstellt.

| Recherchenort | Abschlußdatum der Recherche | Prüfer |
|---|---|---|
| Den Haag | 26-04-1982 | COUCKE |

EPA form 1503.1   06.78